# EUROPÄISCHE PATENTSCHRIFT

(11) **EP 1 194 976 B1**
(45) Veröffentlichungstag und Bekanntmachung des Hinweises auf die Patenterteilung: **21.02.2007**
(21) Anmeldenummer: 00927157.8
(22) Anmeldetag: 06.05.2000
(51) Int. Cl.: H01M 10/34

(54) **BATTERIE IN BIPOLARER STAPELBAUWEISE SOWIE VERFAHREN ZU DEREN HERSTELLUNG**
BATTERY IN BIPOLAR STACKED CONFIGURATION AND METHOD FOR THE PRODUCTION THEREOF
BATTERIE DE STRUCTURE BIPOLAIRE EN EMPILEMENT ET PROCEDE PERMETTANT DE LA PRODUIRE

(30) Priorität: 29.06.1999 DE 19929950
(43) Veröffentlichungstag der Anmeldung: 10.04.2002
(73) Patentinhaber: Deutsche Automobilgesellschaft mbH, 38112 Braunschweig (DE)
(72) Erfinder: BENCZUR-ÜRMÖSSY, Gabor, D-70199 Stuttgart (DE); GESIERICH, Marita, D-71384 Weinstadt (DE); OHMS, Detlef, D-37603 Holzminden (DE); WIESENER, Klaus, D-01219 Dresden (DE)
(86) Internationale Anmeldenummer: PCT/EP2000/004085
(87) Internationale Veröffentlichungsnummer: WO 2001/003225

(56) Entgegenhaltungen:
- EP-A- 0 863 565
- US-A- 4 567 119
- US-A- 5 419 981
- US-A- 5 552 243

## Beschreibung

Die Erfindung betrifft eine Batterie zur elektrochemischen Speicherung von Energie in bipolarer Stapel-Bauweise gemäß dem Oberbegriff des Anspruches 1.

Die Erfindung betrifft insbesondere den Aufbau und die Funktionsweise einer derartigen elektrochemischen Batterie.

Eine derartige Batterie in bipolarer Stapelbauweise ist bspw. aus der US-A-5419981 bekannt. Die vorbekannte Batterie weist mehrere in einem gasdicht verschlossenen Behälter untergebrachten Subzellen auf, wobei eine Subzelle jeweils zwei Elektroden unterschiedlicher Polarität und einen elektrolytgetränkten Separator beinhaltet. Zwischen polaritätsunterschiedlichen Elektroden benachbarter Subzellen ist eine elektrisch leitende Verbindungswand zwischengelegt, die diese Elektroden elektronisch miteinander verbindet und die den Elektrolyt einer Subzelle von dem Elektrolyt einer benachbarten Subzelle trennt. Über Bohrungen weisen alle Subzellen einen gemeinsamen Gasraum auf, wobei die Subzellen durch eine ständige Kraftwirkung aufeinander gepreßt sind. Hierbei bilden die äußeren Wände des Stapels die stromableitenden Pole.

Seit etwa 15 Jahren gibt es alkalische Akkumulatoren mit einem Elektrodentyp, der unter dem Begriff Faserstrukturgerüstelektrode bekannt geworden ist. Derartige Elektroden und Verfahren zu ihrer Herstellung sind z.B. in den DE 40 40 017 C2, DE 41 03 546 C2, DE 38 22 197 C1, DE 40 04 106 C2, DE 39 35 368 C1, DE 36 32 351 C1, DE 36 32 352 C1, DE 41 04 865 C1 und DE 42 25 708 C1 offenbart.

Der DE 40 04 106 C2 ist beispielsweise eine Faserstrukturgerüstelektrode mit erhöhter Belastbarkeit, den DE 38 22 197 C1, DE 40 40 017 C2 und DE 41 03 546 C2 Verfahren zum Füllen von Fasestrukturgerüstelektroden für Akkumulatoren mit einer Aktivmassenpaste zu entnehmen.

Herkömmliche Akkumulatoren bestehen aus einzelnen galvanischen Elementen die aus Einzelelektroden unterschiedlicher Polarität, dem Elektrolyten, dem Separator zwischen den Elektroden, dem Zellen- oder Batteriegefäß und den stromzuführenden sowie weiteren passiven Bauteilen.

Eine bipolare Stapelbauweise unterscheidet sich vom konventionellen Aufbau dadurch, daß die Verbinder zwischen den einzelnen Zellen und die separaten Zellgehäuse wegfallen und die eletrochemischen Elemente, die als Subzellen bezeichnet werden, durch leitende Zwischenwände in Reihe verschaltet sind.

Jede Subzelle besitzt eine positive Elektrode, einen Separator und eine negative Elektrode, wobei die beiden Elektroden durch den elektrolytgefüllten Separator getrennt werden.

Zwischen je zwei Subzellen befindet sich eine Verbindungswand, die sowohl für die elektrolytische Trennung der Subzellen, als auch die elektrische Leitung bzw. die Kontaktierung senkrecht zur Fläche zwischen der positiven und negativen Elektrode sorgt, wobei der Strom in Querrichtung zu den Elektroden fließt.

Dazu berühren sich die aufeinandertreffenden Flächen der Verbindungswand einerseits und der entsprechenden positiven oder negativen Elektrode andererseits, indem die Verbindungswand die Elektroden unter einer vorgegebenen aber im Betrieb geringfügig wechselnden Anpreßkraft großflächig kontaktiert. Somit existieren für den elektrischen Strom kurze Wege. Durch eine solche Bauweise wird die spezifische Energie gesteigert, da der hohe Materialeinsatz für die Stromableitung minimiert wird. Es entfallen nämlich die inaktiven Bauteile, wie mindestens die Stromableiterfahnen zu jeder einzelnen Elektrode und die Polbrücken, an denen die Stromableiterfahnen befestigt sind, die sonst zur elektrischen Stromleitung benötigt werden.

Der schematische bipolare Aufbau und die Funktionsweise einer mehrzelligen Batterie in Pile-Bauform ist z. B. dem Batterie-Lexikon von Hans-Dieter Jaksch, Pflaum-Verlag München, S.442 zu entnehmen. Für die Verbindungswand ist z. B. Metall oder ein elektrisch leitendes Polymer bekannt, wobei bei metallischen Verbindungswänden sich für alkalische wäßrige Systeme Nickelbleche oder vernickelte Stahlbleche anbieten.

Aus der DE 692 16 230 T2 ist eine Batterie in bipolarer Stapelbauweise mit mehreren in einem gasdicht verschlossenen Behälter untergebrachten Subzellen bekannt, die einen gemeinsamen Gasraum aufdweisen, wobei die Freiräume der Subzellen durch mehrere kleine Öffnungen verbunden sind. Die Öffnungen, befinden sich in Metallplatten zwischen den Sub-Zellen.

Aus der DE-PS 453 977 ist ein Stackaufbau in einer Blei-Säure-Batterie ohne gemeinsamen Gasraum bekannt, wie er ebenfalls als Filterpressenbauweise bei Brennstoffzellen bekannt ist.

Aus der DE-PS 876 260 sind festabgedichteten einzelne Subzellen mit bipolaren Elementen bei einem Blei-Säuresytem bekannt. Zusätzlich befinden sich die einzelnen Zellen in abgeschlossenen Kammern.

Aus der EP 125 904 B1 ist bei einer Batterie ein mittiger Gasraum bekannt, wobei es sich bei dieser Batterie um keine bipolare Batterie handelt. Als aktives Material ist die Verwendung von Lithium und ein organischer Elektrolyt vorgesehen. Das System stellt eine Reihenschaltung von Knopfzellen in einem gemeinsamen Gehäuse dar. Der mittige Gasraum ist nicht mit den Zellen verbunden.

Aufgabe der vorliegenden Erfindung ist es daher, eine Batterie in bipolarer Stapelbauweise bereitzustellen, bei der im Betrieb eine gleichmäßige Belastung der einzelnen Subzellen möglich ist.

Die Aufgabe wird mit einer Batterie mit den Merkmalen des Anspruchs 1 gelöst. Erfindungsgemäß ist vorgesehen, daß die Elektroden, die Separatoren und die Verbindungswände in der Form von Platten oder Scheiben vorliegen, daß die Batterie aus einem Stapel aus einzelnen Platten oder Scheiben besteht, wobei die Paare von positiven und negativen Elektroden mit Separatorlagen und Verbindungswänden gestapelt sind und der elektrische Kontakt nur durch eine Pressung der einzelnen Platten oder Scheiben gegeneinander entsteht, wobei die negative Elektrode nur von einer Seite mit der aktiven Masse beschichtet ist und die positive Elektrode auf der Kontaktseite weitgehend frei von aktiver Masse ist und alle Subzellen einen gemeinsamen als Mittelkanal ausgebildeten Gasraum aufweisen, jedoch keinen Elektrolytkontakt besitzen.

Die Batterie weist also nicht die aus der Literatur bekannten bipolaren Elektroden auf, sondern besteht aus einzelnen Elektroden als Scheiben oder Platten, die mit Separatorlagen und dünnen scheibenförmigen Verbindungswänden gestapelt werden. Der elektrische Kontakt entsteht nur durch die Pressung der Teile. Dabei ist es zweckmäßig dafür zu sorgen, daß metallische Teile ohne isolierende Schichten zusammentreffen und die Verbindungswand sauber ist. Der elektrische Kontakt kann darüberhinaus durch die Leitfähigkeit erhöhende Zusätze verbessert werden.

Insbesondere weist die erfindungsgemäße Batterie einen für alle Elektroden bzw. Zellen gemeinsamen Gasraum auf. Die gasmäßige Verbindung der Subzellen untereinander bewirkt die erfindungsgemäße Realisierung einer Batterie deren einzelnen Bauteile einer gleichmäßigen mechanischen und elektrischen Beanspruchung unterworfen ist. Damit stehen alle Subzellen unter dem gleichen Gasdruck und gleichem Flächenpreßdruck. Ferner ist ein Ausgleich der Wasserstoffbeladung und der Elektrolytkonzentration entlang der einzelnen Elektroden möglich. Durch die Wärmetönung der Reaktionen an den Elektroden wird auch ein Temperaturausgleich bewirkt. Im gleichen Sinne erfolgt auch ein Ausgleich der Verdünnung der Elektrolyten der einzelnen Subzellen durch die Überführung von gasförmigen Wasser. Ein weiterer Vorteil besteht darin, daß in Folge des gemeinsamen Gasraumes nur ein einziges Überdruck / Sicherheitsventil benötigt wird.

Diese erfindungsgemäßen Merkmale sind insbesondere bei dem für den Betrieb der Zelle vorzugsweise verwendeten elektrochemischen Nickel / Metallhydrid System von entscheidendem Vorteil, da die negative Elektrode im Gasgleichgewicht mit dem gespespeicherten Reaktanden Waserstoff in der Zelle steht und die positive Elektrode am Ladeende zu einer Gasbildung neigt. Der beschriebene vorteilhafte Ausgleich der Ladungen ist ausschließlich auf das der Erfindung zugrunde gelegte Nickel-Metallhydridsystem beschränkt.

Durch die Gestaltung der Verbindungsquerschnitte der Gasdurchführungen ist auch eine Designoptimierung möglich.

Vorteilhafte Weiterbildungen ergeben sich aus den Unteransprüchen. Die Verbindungselemente können aus Nickelblechen bestehen. Ihre Dicke beträgt vorteilhafterweise höchstens 0,1mm.

Die aufzuwendende Presskraft beträgt etwa 10 bis 35 N/cm². Sie kann durch elastische Elemente, bspw. Federelemente eingestellt werden. Sie kann aber auch durch einen starren Aufbau der erfindungsgemäßen Batterie eingestellt werden, wobei Endplatten vorgesehen sind, die einen festgelegten Abstand voneinander aufweisen.

Durch das Kriechvermögen der Lauge an metallischen Flächen im Potentialfeld wird der Elektrolyt zwischen den Zellen transportiert und irreversibel verschoben. Das würde zum Ausfall des Batteriesystems durch Austrocknen führen. Überraschend hat sich herausgestellt, daß durch das Auftragen einer hydrophoben Beschichtung, die aus einer oder mehreren Teilschichten bestehen kann, auf die Kanten der metallischen Verbindungsscheiben dieser Prozesse wirksam unterbunden wird. Vorzugsweise wird erfindungsgemäß eine Beschichtung mittels Polytetrafluorethylen oder eines bituminösen Stoffes vorgenommen.

Bei der ersten Ladung der erfindungsgemäßen Batterie dehnt sich die positive Elektrode durch Wasser- und Alkalieinlagerung in den Träger, z.B. in das Schichtengitter des Nickelhydroxydes in der Faserstrukturelektrodengerüsts, aus. Die negative Elektrode dehnt sich durch Einlagerung von Wasserstoff in das Trägermatrial gleichfalls aus. Daher ist es vorteilhaft, wenn die Separatoren aus einem elastischen Vlies oder Filz bestehen, welche die bei der Ausdehnung der Elektroden entstehenden Druckkräfte aufnehmen.

Die erfindungsgemäße Batterie benutzt einen Mittelkanal, um den herum die Stapel aus Elektroden, Separatoren und Verbindungswänden angeordnet sind, wobei die Stapel durch poröse Verbindungswänden angeordnet sind, wobei die Stapel verbunden sind. Die Subzellen kommunizieren mit dem Mittelkanal durch die porösen Verbindungselemente, bspw. Ringe o. dgl. aus porösem Polytetrafluorethylen. Im Mittelkanal kann ein Zuganker zur Entlastung der Endplatten vorgesehen sein. Die Elektrolytmenge kann durch Zugabe von Flüssigkeit, also z. B. Wasser, durch ein im Mittelkanal eingebautes Rohr aus einem porösen Material, z.B. porösem Polytetrafluorethylen, reguliert werden.

Ein Verfahren zur Montage einer erfindungsgemäßen Batterie sieht vor, daß die einzelnen Platten vor dem Zusammenbau mit Elektrolyt befüllt und die Bauteile danach aufeinander gestapelt werden.

Die mit der Erfindung erzielten Vorteile sind insbesondere darin begründet, daß dadurch eine Batterie realisiert werden kann, die hohe strommäßige Belastungen bei günstiger Spannungslage durch die kurzen Stromwege ermöglicht. Die Austauschvorgänge in der

Batterie gewährleisten wie auch das elektrochemische System eine hohe Nutzungsdauer der Batterie

Gegenüber herkömmlichen Batterien wird die Belastbarkeit und Handhabung der Batterie deutlich verbessert.

Vorteilhafte Weiterbildungen ergeben sich aus den Unteransprüchen.

Im folgenden wird die vorliegende Erfindung anhand der Zeichnungen näher beschrieben.
- Fig. 1:: eine schematische Darstellung des Bauprinzips eines Akkumulators in bipolarer Stapelbauweise und
- Fig. 2:: eine schematische Schnittdarstellung des Akkumulators aus Figur 1 in Form eines runden Stapels gemäß der Erfindung

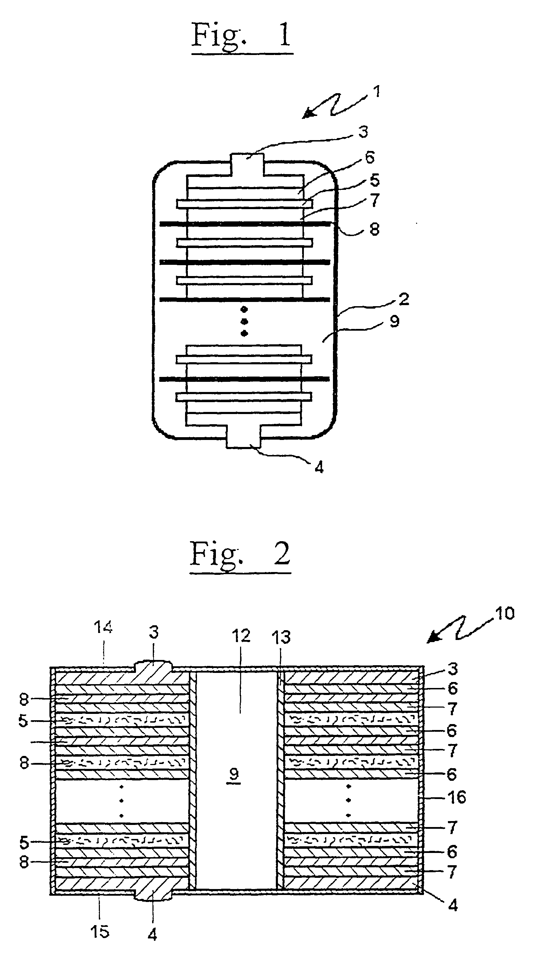

Der in Figur 1 schematisch dargestellte Akkumulator 1 in Stapelform weist ein Gehäuse 2 mit einem negativen Pol 3 und einem positiven Pol 4 auf. Im Gehäuse 2 befindet sich ein Stapel aus vereinzelten scheiben- oder plattenförmigen Separatoren 5, negativen Elektroden 6, positiven Elektroden 7 und Verbindungswände 8. Alle Scheiben 5, 6, 7, 8 bzw. daraus gebildeten Subzellen weisen einen gemeinsamen Gasraum 9 auf. Der Stapel wird durch an der Innenwand des Gehäuses 16 angeordnete Federelemente (nicht dargestellt), bspw. elastische Scheiben, zusammengepreßt. Der elektrische Kontakt kommt alleine durch den Preßdruck zustande. Die Verbindungswände 8 können aus Nickelblechen bestehen. Ihre Dicke beträgt vorteilhafterweise höchstens 0,1 mm.

In Figur 2 ist schematisch ein Längsschnitt durch eine Ausführungsform 10 der erfindungsgemäßen Batterie dargestellt. Die scheiben- oder plattenförmigen Separatoren 5, Elektroden 6, 7 und Verbindungswände 8 sind nunmehr rund und weisen einen Mittelkanal 12 auf, der als zentrale Bohrung in den Platten oder Scheiben 5, 6, 7, 8 ausgebildet ist und bspw. mit einer Schraube verschlossen ist. Der Stapel ist in einem Gehäuse16 fest eingeschlossen, wobei zwei Endplatten 14, 15 vorgesehen sind, die einen festen Abstand zueinander aufweisen und für die Pressung sorgen. Die Endplatten 14, 15 können Teil des Gehäuses 16 sein oder auch separat vorhanden und von der Wandung des Gehäuses 16 umschlossen sein. Der Stapel wird mittels O-Ringen zentriert, welche entlang der Wandung des Gehäuses 16 und zwischen jeweils zwei Verbindungswänden 8 angeordnet sind. Sie können aus einem porösen Material oder aus einem Material, welches den Wärmeübergang zwischen den Platten oder Scheiben begünstigt, bspw. Neopren, bestehen. Der gemeinsame Gasraum 9 wird durch dem Mittelkanal 12 gebildet. Über den Mittelkanal 12 kann günstigerweise auch bspw. Elektrolytflüssigkeit nachgefüllt werden. Der Mittelkanal 12 ist insbesondere als poröses Rohr 13 aus Polytetrafluorethylen ausgeführt. Statt des Rohres 13 können auch Ringe aus porösem Material eingesetzt werden. Die Pole 3, 4 befinden sich an der Ober- bzw. Unterseite des Gehäuses 16. Als Polplatte kann z.B. eine Kombination aus Nickel und biegefesten Wabenkörpern aus Kunststoff oder Aluminium vorgesehen sein.

In dieser Bauvariante mit festgelegtem Endplattenabstand wird der zur Kontaktierung notwendige Anpreßdruck beim Bauen vorgegeben und steigt bei der ersten Belastung durch die Dehnung der Elektroden 6, 7. Da diese praktisch nicht komprimierbar sind, übernimmt der vorzugsweise aus einem elastischen Material bestehende Separator 5 die Federfunktion.

Selbstverständlich ist dieser Batterieaufbau auch mit anderen geometrischen Querschnittsformen, z. Bsp. rund, quadratisch, rechteckig, u.s.w. möglich.

Sämtliche Ausführungsbeispiele schränken in keiner Weise den Erfindungsgegenstand ein.

## Patentansprüche

1. Batterie in bipolarer Stapelbauweise mit mehreren in einem gasdicht verschlossenen Behälter untergebrachten Subzellen, wobei eine Subzelle jeweils zwei Elektroden unterschiedlicher Polarität und einen elektrolytgetränkten Separator aufweist,
wobei zwischen polaritätsunterschiedlichen Elektroden benachbarter Subzellen eine elektrisch leitende Verbindungswand zwischengelegt ist, die diese Elektroden elektronisch miteinander verbindet und die den Elektrolyt einer Subzelle von dem Elektrolyt einer benachbarten Subzelle trennt,
wobei alle Subzellen einen gemeinsamen Gasraum aufweisen,
wobei die Subzellen durch eine ständige Kraftwirkung aufeinander gepreßt sind und
wobei die äußeren, als Druckplatten ausgebildeten Wände des Stapels die stromableitenden Pole bilden,
**dadurch gekennzeichnet,**
**daß** der Elektrolyt einer Subzelle in begrenzter Menge in den Elektroden (6, 7) und dem Separator (5) festgelegt ist,
**daß** der gemeinsame Gasraum (9) durch einen Mittelkanal (12) gebildet ist, der in der Mitte der Subzellen angeordnet ist und
**daß** alle Subzellen durch poröse Verbindungselemente mit dem Mittelkanal (12) verbunden sind.

2. Batterie gemäß Anspruch 1,
**dadurch gekennzeichnet,**
**daß** die Batterie ein Nickel/Metallhydrid-Batterie ist.

3. Batterie gemäß Anspruch 1,
**dadurch gekennzeichnet,**
**daß** eine positive Elektrode (7) eine Faserstrukturelektrode ist, die mit Nickelhydroxydaktivmasse gefüllt ist.

4. Batterie gemäß Anspruch 1,
**dadurch gekennzeichnet,**
**daß** die einer Verbindungswand (8) zugewandte Seite einer positiven Elektrode (7) frei von isolierenden Deckschichten ist.

5. Batterie gemäß Anspruch 1,
**dadurch gekennzeichnet,**
**daß** jede der negativen Elektroden (6) eine höhere Kapazität als die ihr zugehörige positive Elektrode (7) aufweist.

6. Batterie gemäß Anspruch 5,
**dadurch gekennzeichnet,**
**daß** der Überschuß an negativer Kapazität der negativen Elektroden (6) 50 bis 150% der Kapazität der zugehörigen positiven Elektrode (7) beträgt.

7. Batterie gemäß Anspruch 1,
**dadurch gekennzeichnet,**
**daß** eine negative Elektrode (6) ein metallisches Trägermaterial aufweist, daß das Trägermaterial ein Gewebe und/oder ein Streckmetall und/oder eine dreidimensionale Metallstruktur aufweist, und daß in das Trägermaterial eine kunststoffgebundene Masse mit einer Wasserstoffspeicherlegierung eingebracht ist.

8. Batterie gemäß Anspruch 1,
**dadurch gekennzeichnet,**
**daß** die negativen Elektroden (6) asymmetrisch pastiert sind.

9. Batterie gemäß Anspruch 8,
**dadurch gekennzeichnet,**
**daß** die Masse dem Separator (5) zugewandt ist.

10. Batterie gemäß Anspruch 1,
**dadurch gekennzeichnet,**
**daß** die negativen Elektroden (6) eine Struktur aufweisen, die den Durchtritt von Gasen ermöglicht.

11. Batterie gemäß Anspruch 1,
**dadurch gekennzeichnet,**
**daß** der mittige Gasraum (9) einen Zuganker zur Gewährleistung des Anpreßdruckes aufweist.

12. Batterie gemäß Anspruch 1,
**dadurch gekennzeichnet,**
**daß** die Subzellen jeweils über mindestens einen Dichtring mit dem gemeinsamen Gasraum (9) verbunden sind, und daß diese Dichtringe einen elektrolytischen Durchtritt verhindern und einen Gasaustausch mit dem gemeinsamen Gasraum (9) ermöglichen.

13. Batterie gemäß Anspruch 12,
**dadurch gekennzeichnet,**
**daß** die Dichtringe aus porösem Polytetrafluorethylen bestehen.

14. Batterie gemäß Anspruch 1,
**dadurch gekennzeichnet,**
**daß** die Verbindungswände (8) randseitig ein teerartiges Beschichtsmaterial aufweisen, das vor dem Überkriechen des Elektrolyten schützt.

15. Batterie gemäß Anspruch 1 und 13,
**dadurch gekennzeichnet,**
**daß** die Verbindungswände (8) randseitig eine Gummierung aufweisen, die vom Überkriechen des Elektrolyten schützt.

16. Batterie gemäß Anspruch 1,
**dadurch gekennzeichnet,**
**daß** die Subzellen einen porösen Filzkörper aufweisen und daß die Filzkörper ein Speicher für überschüssigen Elektrolyten sind.

17. Batterie nach Anspruch 1,
**dadurch gekennzeichnet,**
**daß** die Elektroden (6, 7), die Separatoren (5) und die Verbindungswände (8) jeweils in der Form von vereinzelten Platten oder Scheiben vorliegen, daß die Batterie (1, 10) aus einem Stapel dieser vereinzelten Platten oder Scheiben besteht, wobei die Paare von positiven (7) und negativen Elektroden (6) mit Separatorlagen (5) und Verbindungswänden (8) in einem gemeinsamen Gasraum (9) gestapelt sind, wobei die negative Elektrode (6) nur von einer Seite mit der aktiven Masse beschichtet ist und/oder die positive Elektrode (7) auf der Kontaktseite frei von aktiver Masse ist und der elektrische Kontakt nur durch eine Pressung der einzelnen Platten oder Scheiben gegeneinander erfolgt.

18. Batterie nach Anspruch 1,
**dadurch gekennzeichnet,**
**daß** der Druck zwischen den Bauteilen der einzelnen Subzellen und den Subzellen selbst 10 bis 35 N/cm² beträgt.

19. Batterie nach Anspruch 1,
**dadurch gekennzeichnet,**
**daß** als druckgebendes Bauteil für die Pressung ein elastisches Element vorgesehen sind.

20. Batterie nach Anspruch 1,
**dadurch gekennzeichnet,**
**daß** als druckgebendes Bauteil für die Pressung zwei Endplatten (14, 15) vorgesehen sind, die einen fest vorgegeben Abstand voneinander aufweisen.

21. Batterie nach Anspruch 1,
**dadurch gekennzeichnet,**
**daß** die Grenzflächen und/oder Kanten der metallischen Verbindungswand (8) eine hydrophobe Beschichtung, vorzugsweise aus einem oder mehreren gut haftenden bituminösen Stoffen aufweist.

22. Batterie nach Anspruch 1,
**dadurch gekennzeichnet,**
**daß** der Mittelkanal (12) ein poröses Rohr (13) aufweist.

23. Batterie nach Anspruch 1 oder 22,
**dadurch gekennzeichnet,**
**daß** das poröses Verbindungselement und/oder das poröses Rohr (13) aus porösem Polytetrafluorethylen besteht.

## Claims

1. A battery in bi-polar stacked configuration having several sub-cells accommodated in a gas-tight sealed container, one sub-cell having two electrodes of different polarity and an electrolyte-impregnated separator, there being positioned between the electrodes of differing polarity of neighbouring sub-cells an electrically conductive connecting wall which connects these electrodes together electronically and separates the electrolyte in one sub-cell from the electrolyte in a neighbouring sub-cell, all sub-cells having a common gas chamber,
the sub-cells being pressed together by the application of a constant force, the outer walls of the stack which are designed as pressure plates forming the current discharging poles,
**characterised in that**
the electrolyte of one sub-cell is determined in a limited amount in the electrodes (6, 7) and in the separator,
the common gas chamber (9) is formed by a central channel (12) which is positioned in the middle of the sub-cells and all the sub-cells are connected to the central channel (12) by porous connecting elements.

2. A process in accordance with claim 1,
**characterised in that**
the battery is a nickel/metal hydride battery.

3. A process in accordance with claim 1,
**characterised in that**
one positive electrode (7) is a fibre structure electrode which is filled with an active nickel hydroxide mass.

4. A process in accordance with claim 1,
**characterised in that**
the side of a positive electrode (7) facing a connecting wall (8) is free of insulating covering layers.

5. A process in accordance with claim 1,
**characterised in that**
each of the negative electrodes (6) has a higher capacity than its corresponding positive electrode (7).

6. A process in accordance with claim 5,
**characterised in that**
the excess of negative capacity in the negative electrodes (6) represents 50% to 150% of the capacity of the corresponding positive electrodes (7).

7. A process in accordance with claim 1,
**characterised in that**
one negative electrode (6) has a metal base material, the base material is a woven fabric and/or an expanded metal mesh and/or a three dimensional metal structure, and a plastic bonded mass with a hydrogen storage alloy is integrated into the base material.

8. A process in accordance with claim 1,
**characterised in that**
the negative electrodes (6) are pasted asymmetrically.

9. A process in accordance with claim 8,
**characterised in that**
the mass is facing the separator (5).

10. A process in accordance with claim 1,
**characterised in that**
the negative electrodes (6) have a structure which allows gasses to pass through them.

11. A process in accordance with claim 1,
**characterised in that**
the central gas chamber (9) has a tie rod to guarantee the contact pressure.

12. A process in accordance with claim 1,
**characterised in that**
the sub-cells are connected to the common gas chamber (9) via at least one sealing ring, and these sealing rings prevent the passage of electrolyte and permit a gas exchange with the common gas chamber (9).

13. A process in accordance with claim 12,
**characterised in that**
the sealing rings are made of porous polytetrafluorethylene.

14. A process in accordance with claim 1,
**characterised in that**
the connecting walls (8) have a tar-like coating material at the edges which protects against electrolyte creep.

15. A process in accordance with claims 1 and 13,
**characterised in that**
the connecting walls (8) have a rubber coating at the edges which protects against the electrolyte creep.

16. A process in accordance with claim 1,
**characterised in that**
the sub-cells have a porous felt body and the felt body provides storage for excess electrolyte.

17. A process in accordance with claim 1,
**characterised in that**
the electrodes (6, 7), the separators (5) and the connecting walls (8) all take the form of individual plates or discs, the battery (1, 10) consists of a stack of these individual plates or discs, the pairs of positive electrodes (7) and negative electrodes (6) being stacked in a common gas chamber (9) with separator layers (5) and connecting walls (8), the negative electrode (6) being coated with the active mass on one side only and/or the positive electrode (7) being free of active mass on the contact side and the electrical contact being made only when the individual plates or discs are pressed against one another.

18. A process in accordance with claim 1,
**characterised in that**
the pressure between the components of the individual sub-cells and the sub-cells themselves is between 10 and 35 N/cm².

19. A process in accordance with claim 1,
**characterised in that**
an elastic element is provided as the pressure exerting component for the application of pressure.

20. A process in accordance with claim 1,
**characterised in that**
two end plates (14, 15) positioned a specific distance apart are provided as the pressure exerting component for the application of pressure.

21. A process in accordance with claim 1,
**characterised in that**
the contact surfaces and/or edges of the metal connecting wall (8) have a hydrophobic coating, preferably made of one or more highly adhesive bituminous substances.

22. A process in accordance with claim 1,
**characterised in that**
the central channel (12) has a porous tube (13).

23. A process in accordance with claim 1 or 22,
**characterised in that**
the porous connecting element and/or the porous connecting tube (13) is made of porous polytetrafluorethylene.

## Revendications

1. Batterie de structure bipolaire en empilement avec plusieurs sous-cellules implantées dans un récipient fermé étanche aux gaz, une sous-cellule comprenant respectivement deux électrodes de différentes polarités et un séparateur imprégné d'électrolytes,
moyennant quoi entre des électrodes de différentes polarités de sous-cellules adjacentes est placée une paroi de connexion électriquement conductrice qui relie électroniquement ces électrodes entre elles et qui sépare l'électrolyte d'une sous-cellule de l'électrolyte d'une sous-cellule adjacente,
moyennant quoi toutes les sous-cellules comprennent un espace gazeux commun,
moyennant quoi les sous-cellules sont pressées les unes sur les autres par un effet dynamique constant et
moyennant quoi les parois externes conçues comme des plaques de compression de l'empilement forment les pôles de dérivation de courant,
**caractérisée en ce que**,
l'électrolyte d'une sous-cellule est déterminé en quantité limitée dans les électrodes (6, 7) et dans le séparateur (5),
l'espace gazeux commun (9) est formé par un canal central (12) qui est disposé au centre des sous-cellules et toutes les sous-cellules sont reliées par des éléments de connexion poreux au canal central (12).

2. Batterie selon la revendication 1, **caractérisée en ce que** la batterie est une batterie au nickel/hydrure de métal.

3. Batterie selon la revendication 1, **caractérisée en ce qu'**une électrode positive (7) est une électrode de structure fibreuse qui est remplie de masse active d'hydroxyde de nickel.

4. Batterie selon la revendication 1, **caractérisée en ce que** la face dirigée vers une paroi de connexion (8) d'une électrode positive (7) est exempte de couches de revêtement isolantes.

5. Batterie selon la revendication 1, **caractérisée en ce que** chacune des électrodes négatives (6) présente une capacité plus élevée que l'électrode positive (7) associée à celle-ci.

6. Batterie selon la revendication 5, **caractérisée en ce que** l'excédent de capacité négative des électrodes négatives (6) représente 50 à 150 % de la capacité de l'électrode positive associée.

7. Batterie selon la revendication 1, **caractérisée en ce qu'**une électrode négative (6) présente un matériau support métallique, de sorte que le matériau support comprend un tissu et/ou un métal déployé et/ou une structure métallique tridimensionnelle, et dans le matériau support est implantée une masse à liant en matière plastique avec un alliage à mémoire d'hydrogène.

8. Batterie selon la revendication 1, **caractérisée en ce que** les électrodes négatives (6) sont empâtées asymétriquement.

9. Batterie selon la revendication 8, **caractérisée en ce que** la masse est dirigée vers le séparateur (5).

10. Batterie selon la revendication 1, **caractérisée en ce que** les électrodes négatives (6) présentent une structure qui permet la pénétration des gaz.

11. Batterie selon la revendication 1, **caractérisée en ce que** l'espace gazeux central (9) présente un tirant pour garantir la pression appliquée.

12. Batterie selon la revendication 1, **caractérisée en ce que** les sous-cellules sont reliées respectivement par l'intermédiaire d'au moins une bague d'étanchéité à l'espace gazeux commun (9), et ces bagues d'étanchéité empêchent une pénétration électrolytique et permettent un échange gazeux avec l'espace gazeux commun (9).

13. Batterie selon la revendication 12, **caractérisée en ce que** les bagues d'étanchéité sont en polytétrafluoroéthylène poreux.

14. Batterie selon la revendication 1, **caractérisée en ce que** les parois de connexion (8) comportent sur les bords un matériau de revêtement goudronneux qui protège contre le fluage excessif de l'électrolyte.

15. Batterie selon les revendications 1 et 13, **caractérisée en ce que** les parois de connexion (8) présentent sur les bords un gommage qui protège contre le fluage excessif de l'électrolyte.

16. Batterie selon la revendication 1, **caractérisée en ce que** les sous-cellules comprennent un corps en feutre poreux et les corps en feutre sont un réservoir pour les électrolytes excédentaires.

17. Batterie selon la revendication 1, **caractérisée en ce que** les électrodes (6, 7), les séparateurs (5) et les parois de connexion (8) existent respectivement sous la forme de plaques ou de disques individuels, la batterie (1, 10) est formée d'un empilement de ces plaques ou disques individuels, moyennant quoi les paires d'électrodes positives (7) et négatives (8) sont empilées avec des couches de séparateur (5) et des parois de connexion (8) dans un espace gazeux commun (9), moyennant quoi l'électrode négative (6) est recouverte de la masse active uniquement sur un côté, et/ou l'électrode positive (7) sur la face de contact est dépourvue de masse active, et le contact électrique a lieu uniquement par une compression des différentes plaques ou disques les uns contre les autres.

18. Batterie selon la revendication 1, **caractérisée en ce que** la pression entre les composants des différentes sous-cellules et les sous-cellules elles-mêmes s'élève à 10 à 35 N/cm².

19. Batterie selon la revendication 1, **caractérisée en ce qu'**un élément élastique est prévu en tant que composant capteur de pression pour la compression.

20. Batterie selon la revendication 1, **caractérisée en ce que** deux plaques d'extrémité (14, 15) sont prévues en tant que composant capteur de pression pour la compression, lesquelles présentent une distance fixe les unes par rapport aux autres.

21. Batterie selon la revendication 1, **caractérisée en ce que** les surfaces limites et/ou arêtes de la paroi de connexion métallique (8) comprend un revêtement hydrophobe, de préférence formé d'une ou de plusieurs substances bitumeuses adhérant parfaitement.

22. Batterie selon la revendication 1, **caractérisée en ce que** le canal central (12) comprend un tube poreux (13).

23. Batterie selon la revendication 1 ou 22, **caractérisée en ce que** l'élément de connexion poreux et/ou le tube poreux (13) est formé de polytétrafluoroéthylène poreux.
